# EUROPEAN PATENT SPECIFICATION

(11) **EP 3 297 972 B1**
(45) Date of publication and mention of the grant of the patent: **13.05.2020**
(21) Application number: 17735367.9
(22) Date of filing: 23.06.2017
(51) Int. Cl.: C04B 35/63, C04B 35/66, C04B 28/34, C04B 40/06, C04B 111/28

(54) **DRY COMPOSITION FORMULATED TO BE COMBINED WITH WATER TO FORM A JAMB SPRAY MIX AND METHOD OF TREATING A REFRACTORY BRICK SURFACE REGION IN A COKE OVEN WITH IT**
TROCKENE ZUSAMMENSETZUNG, WELCHE MIT WASSER GEMISCHT EINE SPRÜHMISCHUNG GEEIGNET FÜR PFOSTEN BILDET UND VERFAHREN ZUR BEHANDLUNG VON FEUERFESTEN BACKSTEINOBERFLÄCHEN IM KOKSOFEN DAMIT
COMPOSITION SÈCHE FORMULÉE POUR ÊTRE COMBINÉE À DE L'EAU POUR FORMER UN MÉLANGE DE PULVÉRISATION POUR DE DES JAMBAGES ET PROCÉDÉ DE TRAITEMENT D'UNE RÉGION DE SURFACE DE BRIQUE RÉFRACTAIRE DANS UN FOUR À COKE

(30) Priority: 14.07.2016 US 201661362125 P
(43) Date of publication of application: 28.03.2018
(73) Proprietor: Resco Products, Inc., Pittsburgh, PA 15205 (US)
(72) Inventor: GISEWHITE, Thomas, H., Warren, OH 44483 (US); LANGENOHL, Mark, C., Venetia, PA 15367 (US); MCGREGOR, Lynn, G., Brunswick, OH 44212 (US)
(74) Representative: Murgitroyd & Company
(86) International application number: PCT/US2017/039024
(87) International publication number: WO 2018/013319

(56) References cited:
- EP-A1- 0 007 646
- EP-A1- 0 908 428
- CA-A- 1 233 840
- CN-A- 105 330 159
- JP-A- S62 197 371
- JP-A- 2004 168 586
- JP-A- 2016 003 313
- US-A- 3 814 613
- US-A- 4 188 229
- US-A- 5 512 325
- US-A1- 2004 068 054
- US-A1- 2007 027 023
- US-A1- 2007 027 023
- US-B1- 6 458 732
- Resco Products ET AL: "JAMB COAT P DRY" In: "JAMB COAT P DRY", 13 April 2016 (2016-04-13), Pittsburgh, XP055641568,
- Resco Products ET AL: "JAMB COAT P 99" In: "JAMB COAT P 99", 13 April 2016 (2016-04-13), Pittsburgh, XP055641571,

## Description

### BACKGROUND OF THE TECHNOLOGY

### FIELD OF TECHNOLOGY

The present invention relates to dry composition formulated to be combined with water to form a jamb spray mix, to coke oven door jamb spray mixes and methods for utilizing the mixes. In particular, certain aspects of the present invention relate to a jamb spray mix including certain materials and having advantageous properties in treating a refractory surface region in a coke oven.

### DESCRIPTION OF THE BACKGROUND OF THE TECHNOLOGY

In the production of metallurgical coke, it is typical to employ a coke oven built with refractory bricks to bake the coal at high temperatures. Through continued use, the refractory bricks may become worn, which potentially results in erosion and loss of wall thickness, increased surface abrasiveness, and spalling of the refractory brick surface region. As the bricks wear, byproduct gases may seep through the oven wall, which can adversely impact the emissions level of the coke oven. As such, periodic maintenance and repair of the refractory brick walls of a coke oven is needed to ensure optimal operation. A spray sealant may be used to seal cracks in the coke oven walls by applying a thin layer of a high temperature-resistant sealing material to all or a region of the refractory brick surface within the oven chamber. Such spray products are known in the art as "jamb sprays" because one purpose of such sprays is to seal around the jamb of the oven's access door. Jamb sprays are produced or pre-mixed with a high water content, on the order of at least 20% by weight, and can be applied using a simple pressure spray apparatus including a conventional applicator wand. Because jamb sprays have such a high water content, they are applied as a thin coating to the oven walls, and a typical coating thickness is 0.5 to 50 mm.

Jamb sprays differ fundamentally from "gunning mixes", which are applied to the interior walls of coke ovens to repair the walls. Gunning mixes typically have much lower water content and are much more granular and viscous than jamb sprays, and have a consistency similar to wet concrete. Gunning mixes are applied using gunning equipment, which includes a rotary gunning machine and a specially constructed mixing water injection ring before the nozzle that mixes water with the dry or semi-dry gunning mix as it is sprayed from the nozzle. Because a gunning mix is quite viscous, the application process can be involved and commonly requires a crew of three to five people to apply the gunning mix onto the oven walls, trowel the wet material into crack and to provide a proper surface texture, and clean up the significant overspray that is a common occurrence when gunning. Gunning mixes are applied as relatively thick coatings (typically minimum 50 mm), much thicker than jamb spray coatings; can be as thick as the total depth of the wall lining, which can be 10 cm to 13 cm thick; and are used to restore the oven wall's profile and structural integrity. Patent publications US 2007/027023 A1 and JP 2004 168586 A as well as the product data sheets of RESCO P 99 and RESCO P DRY discuss information that is useful for understanding the background of the invention.

### SUMMARY

The present invention is directed to a dry composition formulated to be combined with water to form a jamb spray mix according to claim 1, a jamb spray mix according to claim 10 and a method for treating a refractory brick surface region in a coke oven with a jamb spray mix according to claim 12.

### DETAILED DESCRIPTION OF CERTAIN NON-LIMITING EMBODIMENTS

The reader will appreciate the foregoing details, as well as others, upon considering the following detailed description of certain embodiments of compositions and methods according to the present invention. The reader also may comprehend certain of such additional details upon using the mixes, compositions, and methods described herein.

In the present description of embodiments and in the claims, other than in the operating examples or where otherwise indicated, all numbers expressing quantities or characteristics of ingredients and products, processing conditions, and the like are to be understood as being modified in all instances by the term "about." Accordingly, unless indicated to the contrary, any numerical parameters set forth in the following description and the attached claims are approximations that may vary depending upon the desired properties one seeks to obtain in the compositions and methods according to the present invention. At the very least, and not as an attempt to limit the application of the doctrine of equivalents to the scope of the claims, each numerical parameter should at least be construed in light of the number of reported significant digits and by applying ordinary rounding techniques.

The present invention, in part, is directed to a jamb spray mix, and to a dry composition formulated to be combined with water to form a jamb spray mix. A "jamb spray" is a term of art and will be readily understood by those having ordinary skill in the maintenance of a coke oven. Typically, a jamb spray is utilized to seal cracks in the interior refractory walls of a coke oven. It is to be understood that the term "jamb spray" as used herein is directed to a spray that may be applied to any high temperature-resistant refractory surface of a coke oven in a generic sense and is not limited to, but does not exclude, application to coke oven door jambs. The jamb spray mix according to the present invention comprises: 0.1 % to 10% phosphate by weight based on total weight of dry ingredients in the mix wherein the phosphate is sodium phosphate, aluminium phosphate, potassium phosphate, and/or magnesium phosphate; 5% to 15% plasticizer by weight based on total weight of dry ingredients in the mix wherein the plasticizer comprises a refractory clay; the balance of the dry ingredients in the mix including fused silica particles and impurities wherein the jamb spray mix comprises 60% to 95% fused silica particles by weight based on total weight of dry ingredients in the mix; and at least 20% water by weight based on total weight of the jamb spray mix. The jamb spray mix is formed by combining the dry ingredients and the water and any other wet ingredients.

In certain embodiments, the jamb spray mix of the present invention comprises 70% to 90% fused silica particles by weight based on the total weight of dry ingredients in the mix. In further embodiments, the jamb spray mix of the present invention comprises 80% to 90% fused silica particles by weight based on total weight of dry ingredients in the mix. "Fused silica", which also is known as "amorphous silica", is a noncrystalline form of silica readily known to those having ordinary skill in refractory compositions and the construction and maintenance of coke ovens. Fused silica can be produced by melting silica sand in an electric arc furnace and cooling the molten material in a manner that provides a non-crystalline material. Fused silica has very low thermal expansion properties, which imparts resistance to thermal cycling and thermal shock, and thereby can reduce the incidence of cracking and/or spalling. The present inventors unexpectedly observed that a novel jamb spray mix composition according to the present invention including a high content of fused silica may provide better high temperature performance, be easier to install on refractory surfaces, and last significantly longer than conventional jamb spray products on the market.

According to certain embodiments, the fused silica particles of the jamb spray mix of the present invention comprise at least two fused silica particle fractions with different particle size distributions. According to further embodiments, the fused silica particle fractions include at least one of a first fused silica particle fraction sized -30 mesh to +50 mesh, a second fused silica particle fraction sized -50 mesh to +100 mesh, and a third fused silica particle fraction sized -120 mesh. In other embodiments, the jamb spray mix of the present invention includes, by weight based on total dry ingredients in the mix, at least one fused silica particle fraction selected from: 15% to 30% of fused silica particles sized -30 mesh to +50 mesh; 25% to 45% of fused silica particles sized -50 mesh to +100 mesh; and 18% to 35% of fused silica particles sized -120 mesh. In other embodiments, the jamb spray mix of the present invention includes, by weight based on total weight of dry ingredients in the mix, at least one fused silica particle fraction selected from: 18% to 28% of fused silica particles sized -30 mesh to +50 mesh; 28% to 40% of fused silica particles sized -50 mesh to +100 mesh; and 21 % to 31 % of fused silica particles sized -120 mesh. In other embodiments, the jamb spray mix of the present invention includes, by weight based on total weight of dry ingredients in the mix, at least one fused silica particle fraction selected from: 20% to 25% of fused silica particles sized -30 mesh to +50 mesh; 32% to 38% of fused silica particles sized -50 mesh to +100 mesh; and 24% to 28% of fused silica particles sized -120 mesh.

"-30 Mesh to +50 mesh" as used herein refers to a particle size distribution in which at least 90% of the particles pass through a 30-mesh sieve (opening size 0.60 mm) and are retained on a 50-mesh sieve (opening size 0.30 mm). "-50 Mesh to +100 mesh" as used herein refers to a particle size distribution in which at least 90% of the particles pass through a 50-mesh sieve and are retained on a 100-mesh sieve (opening size 0.15 mm). "-120 Mesh" as used herein refers to a particle size distribution in which at least 90% of the particles pass through a 120-mesh sieve (opening size 0.125 mm). A -120 mesh particle size is considered a very fine particle size, similar to powder.

It will be understood that embodiments of the jamb spray mixes and the dry versions of mixes according to the present invention may include crystalline silica in addition to fused silica particles. However, the mixes will include fused silica in the weight content ranges described herein.

The jamb spray mix of the present invention includes a phosphate bonding compound. The phosphate solidifies into a hard bonding phase when it is subjected to the hot coke oven surfaces and adheres to the silica brick. The jamb spray mix according to the present invention comprises 0.1 % to 10% phosphate by weight based on the total weight of dry ingredients in the mix. In certain embodiments, the jamb spray mix of the present invention comprises 2% to 5% of phosphate by weight based on the total weight of dry ingredients in the mix. In certain embodiments, the phosphate of the jamb spray mix of the present invention comprises sodium phosphate. Other suitable phosphate compounds include potassium phosphate, magnesium phosphate and aluminium phosphate. Accordingly, the phosphate component of the jamb spray mix comprises sodium phosphate and/or any alternative phosphate compound(s) that form a suitable bonding phase for the coating when the jamb spray mix of the present invention is applied to a hot coke oven interior refractory surface.

The jamb spray mix of the present invention contains 10% to 15% by plasticizer by weight based on total weight of dry ingredients in the mix. The plasticizer imparts plasticity to the mix and keeps the fused silica particles from settling after water is combined with the dry ingredients of the mix. The plasticizer also increases viscosity of the mix for spraying once water has been combined with the dry ingredients of the mix. The plasticizer comprises a refractory clay which may be selected from ball clay and bentonite..

According to certain embodiments, the jamb spray mix of the present invention further comprises boric acid. In certain non-limiting embodiments, the jamb spray mix of the present invention comprises 0.1 % to 10% of powdered boric acid by weight based on total weight of dry ingredients in the mix. The boric acid serves as a low temperature binding agent.

The water content of the jamb spray mix according to the present invention is at least 20% by weight based on total weight of the mix. According to certain embodiments, the water content of the jamb spray mix according to the present invention is at least 30% by weight based on total weight of the mix. The jamb spray mix of the present invention fundamentally differs from a fused silica-containing gunning mix ("Gunite"). Gunite, specifically refractory gunite, is typically a mixture of refractory cement, clay and/or refractory particles, and water that is applied through a gunning hose, which includes a water injection ring that adds water to the gunning mix before it leaves the applicator nozzle. In contrast to the jamb spray mix of the present invention, a conventional semi-dry Gunite composition has substantially lower water content, e.g. , 2-8% water by total weight. As it emerges from the nozzle, a Gunite spray typically includes no more than 10% water, and the consistency of the Gunite spray as-applied is similar to wet concrete.

Anembodiment of a method of treating a refractory brick surface region in a coke oven according to the present invention includes mixing with water a dry composition comprising 0.1 % to 10% phosphate by weight based on total dry weight of the composition, wherein the phosphate is sodium phosphate, aluminium phosphate, potassium phosphate, and/or magnesium phosphate, 5% to 15% plasticizer based on total dry weight of the composition wherein the plasticizer comprises a refractory clay, and the balance including fused silica particles and impurities wherein the dry composition comprises 60% to 95% fused silica particles by weight based on total weight of the dry composition, so that the jamb spray mix comprises at least 20% by weight water based on total weight of the mix. In contrast to conventional Gunite, the water in the jamb spray mix of the present invention is combined with the dry ingredients used to form the mix before the mix is added to the application apparatus and sprayed on the target surface region through the nozzle of the pressurized spray apparatus. The dry ingredients, water, and any other ingredients of the jamb spray mix of the present invention may be combined, for example, in a mixer or using any other suitable apparatus for combining the ingredients. Because, in contrast to Gunite, water is not added to the jamb spray mix of the present invention at the nozzle, the jamb spray mix can be applied using a conventional pressure wand, for example.

A coat of the jamb spray mix of the present invention is applied the refractory brick surface region. The coat may be applied to seal cracks and fill in smaller surface irregularities within the interior of a coke oven, and the thin coat is much less thick than a conventional Gunite coating. The thinner lining results in less refractory material required to repair the coke oven door jamb. The jamb spray also has minimal rebound loss, resulting in less labor to clean after installation has been completed. Conventional gunning commonly requires a crew of three to five people to apply the Gunite onto the oven walls; however, applying the jamb spray mix according to the present invention using a conventional pressure wand may require a crew of only two people.

Various embodiments of jamb spray mixes according to the present inventions may include other ingredients including, for example, sintering aids.

According to certain embodiments, the jamb spray mix of the present invention may be provided in a "wet" version, in which water already has been combined with the dry ingredients to provide the finished jamb spray mix. For example, water may be combined with the dry ingredients at a production plant, and the wet mix may be packaged in plastic pails or bulk containers and sold to distributors or the end user for use in that form.

The present invention is further directed to a "dry" product including all of the dry ingredients that are to be included in a jamb spray mix according to the present invention. The dry product may be sold to end users who combine the dry product with water to provide the jamb spray mix, which may then be applied to a hot surface region in a coke oven using a conventional pressurized spray apparatus. The weight percentage contents in the dry product are based on the total weight of the dry mix, rather than the total weight of the mix once produced by combining the dry ingredients and water.

### EXAMPLE OF CERTAIN NON-LIMITING EMBODIMENTS

The following table provides an example of ingredients from which a example of a jamb spray mix according to the present invention was made.

| **Ingredient** | **Content (weight %)** |
|---|---|
| **Dry Ingredients** | **Based on Total Wieght of Dry Ingredients** |
| Plastic Refractory Clay | 13.044% |
| Fused Silica (-30 mesh to + 50 mesh) | 21.740% |
| Fused Silica (-120 mesh) | 26.087% |
| Fused Silica (-50 mesh to +100 mesh) | 34.781% |
| Trisodium Phosphate | 2.174% |
| Powdered Boric Acid | 2.174% |

| **Liquid Ingredients** | **Based on Total Weight of All Ingredients in Mix** |
|---|---|
| Water | 20% |

Although specific concentrations of ingredients and specific fused silica fraction particle sizes are given in the table above, it is contemplated that the concentrations of ingredients and particle sizes may vary within certain ranges and still provide a suitable jamb spray product. The particular refractory clay used in the example included "M&D clay," which is a plastic clay having the consistency of Play-Doh when combined with water. M&D clay is available from KT Clays and has the following ingredients and characteristics: 62% silica, 31 % alumina, 10% loss on ignition, and a specific surface area of 40 square meters per gram. Although particular specific particle sizes fractions and contents for the fused silica component are given in the table above, the example provided herein does not encompass all possible options for the fused silica size particle sizes and particle size fractions and contents. Rather, the present inventors determined that the fused silica content given in the table represents one possible fused silica particle size distribution that can produce a suitable embodiment of the jamb spray mix. It is to be understood that the compositions and methods of the present invention may incorporate other suitable fused silica particle sizes and concentrations.

The dry ingredients listed in the table were dry-mixed, and subsequently water was added to the dry mix to produce the jamb spray mix. The jamb spray mix was then applied as a thin sealing coat to the hot interior refractory wall of a coke oven using a conventional pressurized applicator, without adding water to the jamb spray mix at the nozzle of the applicator. The resulting jamb spray coating formed when the spray cured on the hot oven wall was compared to a conventional Gunite spray coating formed on a coke oven wall. When applied, the jamb spray mix listed in the table did not provide significant additional structural stability to the oven walls to which it was applied. Rather, it acceptably sealed cracks, seams, and minor imperfections in the oven wall. In contrast, a gunning mix or Gunite is applied much thicker, provides a degree of additional stability to the oven walls, and produces significant overspray during its application. Applying a gunning mix is an involved process that requires a team including a worker who scrapes/trowels the applied material to provide a desired surface condition to the walls (similar to application of plaster to lath strips). The jamb spray mix listed in the table provided better high temperature performance, was easier to install on refractory surfaces, and lasted significantly longer than conventional jamb spray products on the market.

## Claims

1. A dry composition formulated to be combined with water to form a jamb spray mix, the dry composition comprising, by weight:
0.1 % to 10% phosphate by weight based on total weight of the dry composition, wherein the phosphate is sodium phosphate, aluminium phosphate, potassium phosphate, and/or magnesium phosphate;
5% to 15% plasticizer by weight based on total weight of the dry composition, wherein the plasticizer comprises a refractory clay; and
the balance including fused silica particles and impurities, wherein the dry composition comprises 60% to 95% fused silica particles by weight based on total weight of the dry composition.

2. The dry composition of claim 1, wherein the fused silica particles comprise at least two fused silica particle fractions with different particle size distributions.

3. The dry composition of claim 2, wherein the fused silica particle fractions include a first fused silica particle fraction sized -30 mesh to +50 mesh, a second fused silica particle fraction sized -50 mesh to +100 mesh, and a third fused silica particle fraction sized -120 mesh.

4. The dry composition of claim 1, wherein the dry composition comprises, by weight based on total dry weight of the composition, at least one fused silica particle fraction selected from:
15% to 30% of fused silica particles sized -30 mesh to +50 mesh;
25% to 45% of fused silica particles sized -50 mesh to +100 mesh; and
18% to 35% of fused silica particles sized -120 mesh.

5. The dry composition of claim 1, wherein the dry composition comprises, by weight based on total weight of the dry composition, at least one fused silica particle fraction selected from:
18% to 28% of fused silica particles sized -30 mesh to +50 mesh;
28% to 40% of fused silica particles sized -50 mesh to +100 mesh; and
21 % to 31 % of fused silica particles sized -120 mesh.

6. The dry composition of claim 1, wherein the dry composition comprises 2% to 5% of sodium phosphate by weight based on the total weight of the dry ingredients in the mixture.

7. The dry composition of claim 1, wherein the refractory clay is selected from a ball clay and bentonite.

8. The dry composition of claim 1, wherein the dry composition further comprises boric acid.

9. The dry composition of claim 1, wherein the dry composition further comprises 0.1 % to 10% of powdered boric acid by weight based on total weight of the dry composition.

10. A jamb spray mix formulated with the dry composition according to claims 1 to 9, the mixture comprising
at least 20% water by weight based on total weight of the mixture.

11. The jamb spray mix of claim 10, wherein the water content is at least 30% by weight based on total weight of the mixture.

12. A method of treating a refractory brick surface region in a coke oven, the method comprising:
mixing a dry composition according to any of claims 1 to 9 with water, thereby forming a jamb spray mix comprising at least 20 % by weight water based on a total weight of the mix; and
applying a coating of the jamb spray mix to the refractory brick surface region using an air pressurized applicator and associated nozzle.

13. The method of claim 12, wherein water is not introduced at the nozzle.

14. The method of claim 12, wherein a thickness of the coating is 0.5 mm to 50 mm.

## Patentansprüche

1. Eine trockene Zusammensetzung, die formuliert ist, um mit Wasser kombiniert zu werden, um eine Pfostensprühmischung zu bilden, wobei die trockene Zusammensetzung nach Gewicht Folgendes beinhaltet:
bezogen auf das Gesamtgewicht der trockenen Zusammensetzung, nach Gewicht zu 0,1 % bis 10 % Phosphat, wobei das Phosphat Natriumphosphat, Aluminiumphosphat, Kaliumphosphat und/oder Magnesiumphosphat ist;
bezogen auf das Gesamtgewicht der trockenen Zusammensetzung, nach Gewicht zu 5 % bis 15 % Plastifizierungsmittel, wobei das Plastifizierungsmittel einen feuerfesten Ton beinhaltet; und
wobei der Rest Quarzglaspartikel und Unreinheiten umfasst, wobei die trockene Zusammensetzung, bezogen auf das Gesamtgewicht der trockenen Zusammensetzung, nach Gewicht zu 60 % bis 95 % Quarzglaspartikel beinhaltet.

2. Trockene Zusammensetzung gemäß Anspruch 1, wobei die Quarzglaspartikel mindestens zwei Quarzglaspartikelfraktionen mit unterschiedlichen Partikelgrößenverteilungen beinhalten.

3. Trockene Zusammensetzung gemäß Anspruch 2, wobei die Quarzglaspartikelfraktionen eine erste Quarzglaspartikelfraktion mit der Größe -30 Mesh bis +50 Mesh, eine zweite Quarzglaspartikelfraktion mit der Größe -50 Mesh bis +100 Mesh und eine dritte Quarzglaspartikelfraktion mit der Größe -120 Mesh umfassen.

4. Trockene Zusammensetzung gemäß Anspruch 1, wobei die trockene Zusammensetzung, bezogen auf das Gesamttrockengewicht der Zusammensetzung, nach Gewicht, mindestens eine Quarzglaspartikelfraktion beinhaltet, die aus Folgendem ausgewählt ist:
zu 15 % bis 30 % Quarzglaspartikel mit der Größe -30 Mesh bis +50 Mesh;
zu 25 % bis 45 % Quarzglaspartikel mit der Größe -50 Mesh bis +100 Mesh; und
zu 18 % bis 35 % Quarzglaspartikel mit der Größe -120 Mesh.

5. Trockene Zusammensetzung gemäß Anspruch 1, wobei die trockene Zusammensetzung, bezogen auf das Gesamttrockengewicht der trockenen Zusammensetzung, nach Gewicht, mindestens eine Quarzglaspartikelfraktion beinhaltet, die aus Folgendem ausgewählt ist:
zu 18 % bis 28 % Quarzglaspartikel mit der Größe -30 Mesh bis +50 Mesh;
zu 28 % bis 40 % Quarzglaspartikel mit der Größe -50 Mesh bis +100 Mesh; und
zu 21 % bis 31 % Quarzglaspartikel mit der Größe -120 Mesh.

6. Trockene Zusammensetzung gemäß Anspruch 1, wobei die trockene Zusammensetzung, bezogen auf das Gesamtgewicht der trockenen Inhaltsstoffe in dem Gemisch, nach Gewicht zu 2 % bis 5 % Natriumphosphat beinhaltet.

7. Trockene Zusammensetzung gemäß Anspruch 1, wobei der feuerfeste Ton aus einem Ballclay und Bentonit ausgewählt ist.

8. Trockene Zusammensetzung gemäß Anspruch 1, wobei die trockene Zusammensetzung ferner Borsäure beinhaltet.

9. Trockene Zusammensetzung gemäß Anspruch 1, wobei die trockene Zusammensetzung, bezogen auf das Gesamtgewicht der trockenen Zusammensetzung, nach Gewicht ferner zu 0,1 % bis 10 % pulverisierte Borsäure beinhaltet.

10. Eine Pfostensprühmischung, die mit der trockenen Zusammensetzung gemäß den Ansprüchen 1 bis 9 formuliert ist, wobei das Gemisch, bezogen auf das Gesamtgewicht des Gemischs, nach Gewicht mindestens 20 % Wasser beinhaltet.

11. Pfostensprühmischung gemäß Anspruch 10, wobei der Wassergehalt, bezogen auf das Gesamtgewicht des Gemischs, nach Gewicht mindestens 30 % beträgt.

12. Ein Verfahren des Behandelns eines Oberflächenbereichs feuerfester Steine in einem Koksofen, wobei das Verfahren Folgendes beinhaltet:
Mischen einer trockenen Zusammensetzung gemäß einem der Ansprüche 1 bis 9 mit Wasser, dadurch Bilden einer Pfostensprühmischung, die, bezogen auf ein Gesamtgewicht der Mischung, nach Gewicht mindestens 20 % Wasser beinhaltet; und
Aufbringen eines Überzugs der Pfostensprühmischung auf den Oberflächenbereich feuerfester Steine unter Verwendung eines Druckluftapplikators und einer zugehörigen Düse.

13. Verfahren gemäß Anspruch 12, wobei kein Wasser an der Düse eingeführt wird.

14. Verfahren gemäß Anspruch 12, wobei eine Dicke des Überzugs 0,5 mm bis 50 mm beträgt.

## Revendications

1. Une composition sèche formulée pour être combinée avec de l'eau afin de former une préparation de pulvérisation pour jambage, la composition sèche comprenant, en poids :
de 0,1 % à 10 % de phosphate en poids rapporté à un poids total de la composition sèche, dans laquelle le phosphate est le phosphate de sodium, le phosphate d'aluminium, le phosphate de potassium, et/ou le phosphate de magnésium ;
de 5 % à 15 % de plastifiant en poids rapporté à un poids total de la composition sèche, dans laquelle le plastifiant comprend une argile réfractaire ; et
le reste incluant des particules de silice fondue et des impuretés, la composition sèche comprenant de 60 % à 95 % de particules de silice fondue en poids rapporté à un poids total de la composition sèche.

2. La composition sèche de la revendication 1, dans laquelle les particules de silice fondue comprennent au moins deux fractions de particules de silice fondue avec des distributions de tailles de particules différentes.

3. La composition sèche de la revendication 2, dans laquelle les fractions de particules de silice fondue incluent une première fraction de particules de silice fondue dont la taille correspond à -30 mesh à +50 mesh, une deuxième fraction de particules de silice fondue dont la taille correspond à -50 mesh à +100 mesh, et une troisième fraction de particules de silice fondue dont la taille correspond à -120 mesh.

4. La composition sèche de la revendication 1, la composition sèche comprenant, en poids rapporté à un poids sec total de la composition, au moins une fraction de particules de silice fondue sélectionnée parmi :
de 15 % à 30 % de particules de silice fondue dont la taille correspond à -30 mesh à +50 mesh ;
de 25 % à 45 % de particules de silice fondue dont la taille correspond à -50 mesh à +100 mesh ; et
de 18 % à 35 % de particules de silice fondue dont la taille correspond à -120 mesh.

5. La composition sèche de la revendication 1, la composition sèche comprenant, en poids rapporté à un poids total de la composition sèche, au moins une fraction de particules de silice fondue sélectionnée parmi :
de 18 % à 28 % de particules de silice fondue dont la taille correspond à -30 mesh à +50 mesh ;
de 28 % à 40 % de particules de silice fondue dont la taille correspond à -50 mesh à +100 mesh ; et
de 21 % à 31 % de particules de silice fondue dont la taille correspond à -120 mesh.

6. La composition sèche de la revendication 1, la composition sèche comprenant de 2 % à 5 % de phosphate de sodium en poids rapporté au poids total des ingrédients secs dans le mélange.

7. La composition sèche de la revendication 1, dans laquelle l'argile réfractaire est sélectionnée parmi une argile plastique et une bentonite.

8. La composition sèche de la revendication 1, la composition sèche comprenant en sus de l'acide borique.

9. La composition sèche de la revendication 1, la composition sèche comprenant en sus de 0,1 % à 10 % d'acide borique en poudre en poids rapporté à un poids total de la composition sèche.

10. Une préparation de pulvérisation pour jambage formulée avec la composition sèche selon les revendications 1 à 9, le mélange comprenant au moins 20 % d'eau en poids rapporté à un poids total du mélange.

11. La préparation de pulvérisation pour jambage de la revendication 10, dans laquelle la teneur en eau est d'au moins 30 % en poids rapporté à un poids total du mélange.

12. Un procédé de traitement d'une région de surface de brique réfractaire dans un four à coke, le procédé comprenant :
le mélange d'une composition sèche selon n'importe lesquelles des revendications 1 à 9 avec de l'eau, formant de ce fait une préparation de pulvérisation pour jambage comprenant au moins 20 % en poids d'eau rapporté à un poids total de la préparation ; et
l'application d'un revêtement de la préparation de pulvérisation pour jambage sur la région de surface de brique réfractaire à l'aide d'un applicateur à pression d'air et d'une buse associée.

13. Le procédé de la revendication 12, dans lequel de l'eau n'est pas introduite au niveau de la buse.

14. Le procédé de la revendication 12, dans lequel une épaisseur du revêtement va de 0,5 mm à 50 mm.
